# EUROPÄISCHE PATENTSCHRIFT

(11) **EP 1 690 775 B1**
(45) Veröffentlichungstag und Bekanntmachung des Hinweises auf die Patenterteilung: **16.01.2008**
(21) Anmeldenummer: 06002760.4
(22) Anmeldetag: 10.02.2006
(51) Int. Cl.: B62D 5/00, B62D 1/04, G05G 5/05, B66F 9/075

(54) **Lenkvorrichtung**
Steering device
Dispositif de direction

(30) Priorität: 15.02.2005 DE 102005006849
(43) Veröffentlichungstag der Anmeldung: 16.08.2006
(73) Patentinhaber: OM Carrelli Elevatori S.p.A., 20020 Lainate (MI) (IT)
(72) Erfinder: Mariotti, Fabio, 42016 Guastalla (RE) (IT)
(74) Vertreter: Geirhos, Johann

(56) Entgegenhaltungen:
- GB-A- 1 450 393
- US-A- 5 896 942
- US-B1- 6 694 839

## Beschreibung

Die Erfindung betrifft eine Lenkvorrichtung mit einem Lenkwinkelgeber, der mit einer drehbar gelagerten, mit einem elektrischen Lenksignalgeber in Wirkverbindung stehenden Lenkwelle in Wirkverbindung steht, und mit einer auf die Lenkwelle einwirkenden, eine Lenkkraft erzeugenden Lenkkrafteinrichtung.

Bei derartigen elektrischen Lenkvorrichtungen wird durch das Signal des Lenksignalgebers ein elektrischer oder elektrohydraulischer Lenkantrieb gesteuert, der mit dem gelenkten Rad bzw. den gelenkten Rädern in Wirkverbindung steht, wobei keine mechanische Verbindung zwischen der Lenkwelle und dem gelenkten Rad bzw. den gelenkten Rädern besteht. Um für die Bedienperson eine an dem Lenkwinkelgeber fühlbare Rückmeldung zu erzeugen, ist bei derartigen elektrischen Lenkvorrichtungen eine Lenkkraft erzeugende Lenkkrafteinrichtung vorgesehen.

Aus der DE 103 07 567 A1 ist eine Lenkvorrichtung mit den Merkmalen des Oberbegriffs des Anspruchs 1 bekannt. Als Lenkkrafteinrichtung zur Erzeugung einer Lenkkraft an der Lenkwelle, die einer von der Bedienperson beim Betätigen des Lenkwinkelgebers aufzubringenden Betätigungskraft entspricht, ist ein Kolben vorgesehen, der mit der Lenkwelle ein Reibflächenpaar bildet und mittels einer Feder in Richtung der Lenkwelle beaufschlagt ist. Durch die Vorspannkraft der Feder und gegebenenfalls einer Betriebskraft, die durch eine zusätzliche hydraulische oder mechanische Beaufschlagung des Kolbens in Richtung der Lenkwelle erzeugbar ist, wird an dem Reibflächenpaar eine Lenkkraft an der Lenkwelle erzeugt, die der von der Bedienperson beim Drehen des Lenkwinkelgebers aufzubringenden Betätigungskraft entspricht und eine Rückmeldung für die Bedienperson bewirkt. Bei dieser Lenkvorrichtung kann jedoch mittels der Lenkkrafteinrichtung keine automatische Rückstellung der Lenkwelle und somit des Lenkwinkelgebers in eine die Geradeausfahrstellung bildende Mittelstellung erfolgen, wenn die Bedienperson den Lenkwinkelgeber loslässt. Eine derartige automatische Rückstellung des Lenkwinkelgebers in die Mittelstellung und somit in die Geradeausfahrstellung ist jedoch insbesondere bei Flurförderzeugen zur Erzielung einer hohen Betriebssicherheit gewünscht, um beim Loslassen des Lenkwinkelgebers eine definierte Stellung des Lenkwinkelgebers und somit des gelenkten Rades bzw. der gelenkten Räder sicherzustellen.

Der vorliegenden Erfindung liegt die Aufgabe zugrunde, eine Lenkvorrichtung der eingangs genannten Gattung zur Verfügung zu stellen, die hinsichtlich der Betriebssicherheit verbessert ist.

Diese Aufgabe wird erfindungsgemäß dadurch gelöst, dass die Lenkkrafteinrichtung eine mit der Lenkwelle in Wirkverbindung stehende Hubkurve und einen längsbeweglichen Kolben aufweist, der von einer Feder, insbesondere einer Druckfeder, in Richtung der Hubkurve beaufschlagt ist. Mit einer derartigen Lenkkrafteinrichtung kann bei der Auslenkung des Lenkwinkelgebers aufgrund des Hubs der Hubkurve eine Axialverschiebung des Kolbens und somit durch eine Zunahme des Federwegs eine Zunahme der Federkraft der Feder erzielt werden. Diese Federkraft erzeugt somit eine Lenkkraft an der Lenkwelle, die der von der Bedienperson beim Drehen des Lenkwinkelgebers aufzubringenden Betätigungskraft entspricht. Zudem kann mittels der Feder beim Loslassen des Lenkwinkelgebers über den mit der Hubkurve in Verbindung stehenden Kolben eine Rückstellkraft an der Lenkwelle erzeugt werden, die eine automatische Rückstellung der Lenkwelle und somit des Lenkwinkelgebers in die Mittelstellung ermöglicht, wodurch eine Lenkvorrichtung mit einer hohen Betriebssicherheit erzielt wird.

Besondere Vorteile ergeben sich, wenn gemäß einer Weiterbildung der Erfindung die Lenkkrafteinrichtung eine weitere mit der Lenkwelle in Wirkverbindung stehende Hubkurve und einen weiteren längsbeweglichen Kolben aufweist, der von einer weiteren Feder, insbesondere einer Druckfeder, in Richtung der weiteren Hubkurve beaufschlagt ist. Durch entsprechende Ausgestaltung der Hubkurve und der weiteren Hubkurve und geeignete Überlagerung der Hubkurve mit der weiteren Hubkurve ist es auf einfache Weise möglich, die Federkraft der Feder des Kolbens mit der Federkraft der Feder des weiteren Kolbens zu überlagern, um einen gewünschten Verlauf der Lenkkraft und der Rückstellkraft über den an dem Lenkwinkelgeber vorgegebenen Lenkwinkel zu erzielen, beispielsweise eine mit zunehmendem Lenkwinkel zunehmende oder abnehmende Lenkkraft und Rückstellkraft oder ein Anstieg der Lenkkraft im Bereich des maximalen Lenkwinkels.

Gemäß einer bevorzugten Ausgestaltung der Erfindung sind hierbei die Hubkurve und/oder die weitere Hubkurve derart ausgebildet, dass über den an dem Lenkwinkelgeber vorgegebenen Lenkwinkel eine im wesentlichen konstante Lenkkraft und/oder eine im wesentlichen konstante Rückstellkraft erzeugbar ist, wodurch eine ergonomische Betätigung der Lenkvorrichtung für die Bedienperson erzielt werden kann.

Besondere Vorteile ergeben sich, wenn die Lenkkraft über den gesamten Lenkwinkel größer als die Rückstellkraft ist. Hierdurch wird erzielt, dass beim Loslassen des Lenkwinkelgebers eine automatische Rückstellung in die Mittelstellung erfolgt, wobei durch die gegenüber der Rückstellkraft vergrößerte Lenkkraft ein Überschwingen des Lenkwinkelgebers wirksam vermieden werden kann.

Sofern die Hubkurve und/oder die weitere Hubkurve gemäß einer Weiterbildung der Erfindung derart ausgebildet sind, dass im Bereich einer die Mittelstellung bildenden Geradeausfahrtstellung eine im wesentlichen konstante minimale Lenkkraft und/oder eine im wesentlichen konstante minimale Rückstellkraft erzeugbar ist, können Korrekturen der Geradeausfahrtstellung von der Bedienperson auf einfache Weise durchgeführt werden und somit eine sichere Geradeausfahrt erzielt werden.

Zweckmäßigerweise ist die Hubkurve und/oder die weitere Hubkurve hierbei derart ausgebildet, dass zwischen der die Geradeausfahrtstellung bildenden Mittelstellung und einem bestimmten Lenkwinkel eine ansteigende Lenkkraft und/oder ansteigende Rückstellkraft erzeugbar ist, wobei bis zum bestimmten Lenkwinkel eine ansteigende Lenkkraft und Rückstellkraft erzeugt und somit ein feinfühliges Lenken erzielt werden kann.

Eine vorteilhafte Ausführungsform der Erfindung sieht vor, dass die Hubkurve und/oder die weitere Hubkurve als jeweils eine Nockenbahn ausgebildet sind, wobei die Nockenbahnen gegeneinander phasenverschoben sind. Mit einer als Nockenbahn ausgebildeten Hubkurve und einer als Nockenbahn ausgebildeten weiteren Hubkurve, die gegeneinander phasenverschoben sind, ist es auf einfache Weise möglich, die Federkräfte der die Kolben gegen die Hubkurve und die weitere Hubkurve beaufschlagenden Federn derart zu überlagern, dass ein gewünschter Verlauf der Lenkkraft und der Rückstellkraft erzielt wird, insbesondere eine über den Lenkwinkel im wesentlichen konstante Lenkkraft und eine über den Lenkwinkel im wesentlichen konstante Rückstellkraft.

Der gewünschte Verlauf der Lenkkraft und der Rückstellkraft ist hierbei auf einfache Weise einstellbar, wenn der Hub und/oder der Hubverlauf der Hubkurve und/oder der weiteren Hubkurve unterschiedlich sind. Durch unterschiedliche Hübe und Hubverläufe der Hubkurve und der weiteren Hubkurve können durch die hierdurch bedingten maximalen Auslenkungen der entsprechenden Kolben unterschiedliche Federkräfte erzielt und überlagert werden und somit ein gewünschter Verlauf der Lenkkraft und der Rückstellkraft eingestellt werden.

Besondere Vorteile ergeben sich, wenn gemäß einer bevorzugten Ausführungsform der Erfindung der Hub der Hubkurve ausgehend von der Mittelstellung der Lenkvorrichtung bis zum maximalen Lenkwinkel der Lenkvorrichtung auf den maximalen Hub zunimmt. In der Mittelstellung des Lenkwinkelgebers weist somit der Kolben die größte Auslenkung auf. Mit zunehmendem an dem Lenkwinkelgeber vorgegebenen Lenkwinkel nimmt der Hub der Hubkurve zu, wodurch der Kolben gegen die Feder beaufschlagt wird und somit durch einen zunehmenden Federweg der als Druckfeder ausgebildeten Feder die Federkraft ansteigt. Mit einem derartigen Hubverlauf der Hubkurve kann somit eine Lenkkraft und eine Rückstellkraft an der Lenkwelle erzeugt werden.

Sofern hierbei der Hub der weiteren Hubkurve in der Mittelstellung der Lenkvorrichtung den maximalen Hub aufweist und bis zum maximalen Lenkwinkel der Lenkvorrichtung abnimmt, wird mit zunehmendem Lenkwinkel an dem Lenkwinkelgeber die Auslenkung des weiteren Kolbens erhöht und somit die Federkraft der als Druckfeder ausgebildeten Feder, die den mit der weiteren Hubkurve in Wirkverbindung stehenden Kolbens beaufschlagt, aufgrund eines abnehmenden Federwegs reduziert. Bei einem derartigen Hubverlauf der weiteren Hubkurve und der hierdurch bedingten Phasenverschiebung der Hubkurve und der weiteren Hubkurve ist es auf einfache Weise möglich, durch Überlagerung der Federkräfte der die Kolben beaufschlagenden Federn über den an dem Lenkwinkelgeber vorgegebenen Lenkwinkel eine im wesentlichen konstante Lenkkraft und eine im wesentlichen konstante Rückstellkraft zu erzeugen.

Zweckmäßigerweise ist hierbei der maximale Hub der Hubkurve größer als der maximale Hub der weiteren Hubkurve, insbesondere für jeden Lenkwinkel der Hub der Hubkurve größer als der Hub der weiteren Hubkurve ist. Hierdurch kann sichergestellt werden, dass mittels der den Kolben an der Hubkurve abstützenden Feder eine automatische Rückstellung der Lenkwelle für jeden Lenkwinkel erzielt wird.

Sofern die Hubkurve und/oder die weitere Hubkurve im Bereich der Mittelstellung der Lenkvorrichtung einen hubfreien Bereich aufweisen, können im Bereich der Mittelstellung Korrekturen der Geradeausfahrtstellung von der Bedienperson auf einfache Weise durchgeführt werden können und somit eine sichere Geradeausfahrt erzielt werden.

Gemäß einer vorteilhaften Weiterbildung der Erfindung ist vorgesehen, dass der Kolben und/oder der weitere Kolben mittels eines Wälzkörpers, insbesondere einer Rolle, an der Hubkurve und/oder der weiteren Hubkurve abgestützt ist. Durch die Abstützung der Kolben an der Hubkurve und der weiteren Hubkurve mittels Wälzkörper wird erzielt, dass die Wälzkörper an der Hubkurve und der weiteren Hubkurve abwälzen und somit Rollreibung auftritt. Die Rollreibung an den Wälzkörpern bewirkt hierbei bei einer Auslenkung der Lenkwelle von der Neutralstellung in Richtung des maximalen Lenkwinkels eine Erhöhung der Lenkkraft an der Lenkwelle und somit eine Erhöhung der an dem Lenkwinkelgeber von der Bedienperson aufzubringenden Betätigungskraft. Bei der Rückstellung der Lenkwelle ausgehend von einem vorgegebenen Lenkwinkel in Richtung der Neutralsstellung wird die Rollreibung an den Wälzkörpern von der Feder des an der Hubkurve anliegenden Kolbens überwunden, wodurch die Rollreibung eine Verringerung der die Lenkwelle beaufschlagenden Rückstellkraft bewirkt. Hierdurch ist auf einfache Weise eine die Lenkwelle in die Mittelstellung beaufschlagende Rückstellkraft erzeugbar, die aufgrund der an den Wälzkörpern auftretenden Rollreibung kleiner als die Lenkkraft und somit die aufzubringende Betätigungskraft ist. Beim automatischen Rückstellen der Lenkvorrichtung in die Mittelstellung wird somit vermieden, dass im Bereich der Mittelstellung ein Überschwingen auftritt.

Besondere Vorteile ergeben sich hierbei, wenn an dem Wälzkörper ein gummielastischer Ring angeordnet ist, mittels dem der Wälzkörper an der Hubkurve und/oder der weiteren Hubkurve abgestützt ist. Durch einen an dem Wälzkörper angeordneten gummielastischen Ring kann auf einfache Weise die Rollreibung gegenüber einem Stahlkontakt zwischen dem Wälzkörper und der Hubkurve erhöht werden, so dass die Differenz zwischen der Lenkkraft und der Rückstellkraft auf einfache Weise erhöht werden kann.

Eine einfache Anordnung des gummielastischen Rings an dem Wälzkörper ist erzielbar, wenn der gummielastische Ring in einer Nut, insbesondere einer umfangsseitigen Nut, des Wälzkörpers angeordnet ist.

Sofern hierbei der Außendurchmesser des gummielastischen Rings größer als der Außendurchmesser des Wälzkörpers im Bereich der Nut ist, kann eine gezielte Verformung des Ringes bei der Abstützung des Wälzkörpers an der Hubkurve bzw. der weiteren Hubkurve erzielt werden und somit die auftretende Rollreibung an den Wälzkörpern beeinflusst werden.

Gemäß einer bevorzugten Ausgestaltungsform der Erfindung besteht der gummielastische Ring aus Nitril-Kautschuk. Ein derartiger aus Nitril-Kautschuk, sogenanntem NBR, bestehender Ring weist eine hohe Abrieb- und Standfestigkeit auf.

Die Kolben können in Radialrichtung und somit senkrecht zur Drehachse längsverschieblich angeordnet sein, wobei die Hubkurven derart an der Lenkwelle angeordnet sind, dass die Hubkurven bei einer Drehung der Lenkwelle eine Auslenkung der Kolben senkrecht zur Drehachse in radialer Richtung erzeugen. Hierdurch ergibt sich eine in axialer Richtung der Lenkvorrichtung kompakte Bauweise.

Besondere Vorteile sind erzielbar, wenn gemäß einer Ausgestaltungsform der Erfindung der Kolben und/oder der weitere Kolben in Richtung der Drehachse der Lenkvorrichtung längsverschiebbar angeordnet ist, wobei mittels der Hubkurve und/oder der weiteren Hubkurve bei einer Drehung der Lenkwelle eine Auslenkung des Kolbens und/oder des weiteren Kolbens in axialer Richtung und somit in Richtung der Drehachse erzeugbar ist. Die Kolben sind somit parallel zur Drehachse der Lenkwelle und von dieser beabstandet angeordnet, wodurch die Hubkurve und die weitere Hubkurve an der Lenkwelle teilkreisförmig angeordnet sind und einen in Richtung der Drehachse liegenden axialen Hub erzeugen. Hierdurch ist eine in radialer Richtung platzsparende Bauweise der Lenkvorrichtung erzielbar.

Selbstverständlich ist es ebenfalls möglich, die Kolben zwischen einer zur Drehachse radialen Anordnung und einer zur Drehachse parallelen Anordnung in einem beliebigen Winkel bezüglich der Drehachse geneigt anzuordnen.

Bei einer zur Drehachse der Lenkwelle parallelen Anordnung der Kolben ist die Drehachse der Lenkwelle und somit die Drehachse der mit der Lenkwelle in Wirkverbindung stehenden teilkreisförmigen Hubkurve und weiteren Hubkurve senkrecht zur Drehachse der an den Kolben angeordneten Wälzkörpern. Um hierbei ein Abwälzen der Wälzkörper auf der Hubkurve und/oder der weiteren Hubkurve bei Rollreibung sicherzustellen, ist gemäß einer vorteilhaften Ausführungsform vorgesehen, dass die Hubkurve und/oder die weitere Hubkurve zur Drehachse geneigt und die Wälzkörper kegelförmig ausgebildet sind.

Zweckmäßigerweise ist hierbei der Schnittpunkt der Drehachse des Wälzkörpers mit einer Verlängerung der Hubkurve und/oder einer Verlängerung der weiteren Hubkurve auf der Drehachse der Lenkwelle angeordnet. Hierdurch können an den Berührlinien der Wälzkörper mit der Hubkurve bzw. der weiteren Hubkurve gleiche Umfangsgeschwindigkeiten erzielt und somit ein Abrollen der Wälzkörper an der Hubkurve bzw. der weiteren Hubkurve unter Rollreibung sichergestellt werden.

Gemäß einer bevorzugten Ausführungsform der Erfindung ist die Lenkkrafteinrichtung in einem Gehäuse der Lenkvorrichtung angeordnet, wobei die Kolben in dem Gehäuse längsverschiebbar gelagert sind. Die Anordnung der Lenkkrafteinrichtung und somit der Hubkurven und der federbeaufschlagten Kolben in dem Gehäuse ermöglicht eine einfache und platzsparende Bauweise der Lenkvorrichtung.

Vorteile ergibt die Verwendung einer erfindungsgemäßen Lenkvorrichtung in einem Flurförderzeug, insbesondere einem Lagertechnikgerät, beispielsweise einem Kommissionierer, da eine Lenkvorrichtung mit hoher Betriebsicherheit für das Flurförderzeug bei geringem Bauraumbedarf zur Verfügung gestellt wird.

Weitere Vorteile und Einzelheiten der Erfindung werden anhand des in den schematischen Figuren dargestellten Ausführungsbeispiels näher erläutert. Hierbei zeigt
- Figur 1: eine perspektivische Darstellung einer erfindungsgemäßen Lenkvorrichtung,
- Figur 2: eine erfindungsgemäße Lenkvorrichtung in einer aufgelösten Darstellung,
- Figur 3a: eine erste Ansicht der erfindungsgemäßen Lenkvorrichtung in der Mittelstellung,
- Figur 3b: eine zweite Ansicht der erfindungsgemäßen Lenkvorrichtung in der Mittelstellung,
- Figur 4: den Schnitt entlang der Linie A-A in Figur 3a,
- Figur 5: den Verlauf der Lenkkraft und der Rückstellkraft über dem Lenkwinkel.

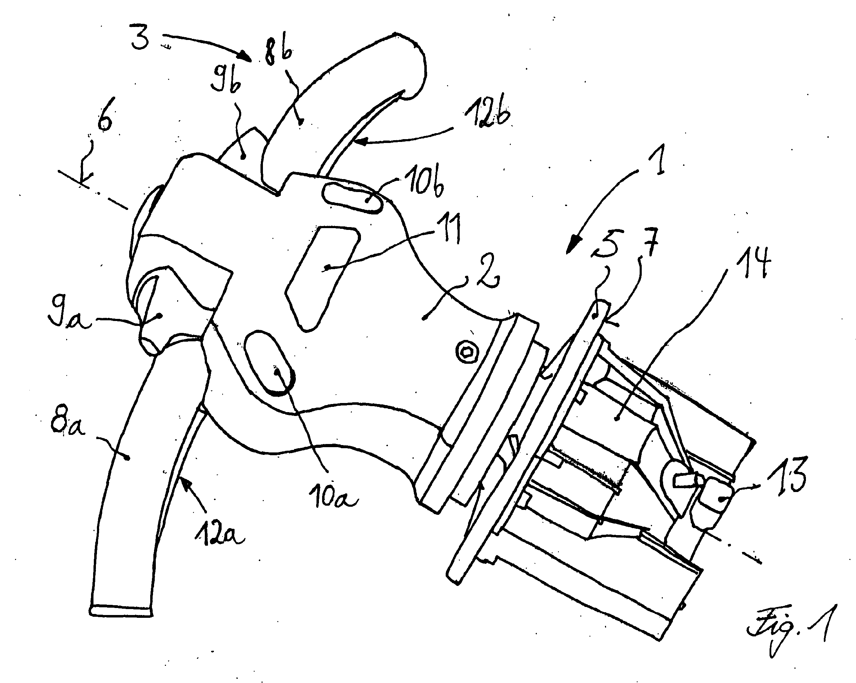

In der Figur 1 ist eine perspektivische Darstellung einer erfindungsgemäßen Lenkvorrichtung 1 für ein beispielsweise als Kommissionierer ausgebildetes und nicht mehr dargestelltes Flurförderzeug gezeigt. Die Lenkvorrichtung 1 weist einen als Lenker 2 ausgebildeten Lenkwinkelgeber 3 auf, der mit einer Lenkwelle 4 in drehfester Verbindung steht. Die Lenkwelle 4 ist in einem Gehäusebauteil 5 um eine Drehachse 6 drehbar gelagert. An dem Gehäusebauteil 5 ist weiterhin ein Flansch 7 zur Befestigung der Lenkvorrichtung 1 an einer an einer Fahrerstandplattform für die Bedienperson ausgebildeten Brüstung des Kommissionierers versehen.

Der Lenker 2 weist einen mittleren Abschnitt auf, an dem zwei zur Drehachse 6 symmetrisch angeordnete Handgriffe 8a, 8b angeordnet sind. Der Handgriff 8b kann hierbei von der linken Hand der Bedienperson und der Handgriff 8a von der rechten Hand der Bedienperson umgriffen werden. In dem mittleren Abschnitt des Lenkers 2 sind weitere Bedienelemente des Flurförderzeugs angeordnet, beispielsweise die Fahrgeschwindigkeit und die Fahrtrichtung vorgebende Drehschalter 9a, 9b für den Fahrantriebs, Tastschalter 10a, 10b für den Hubantrieb und ein Tastschalter 11 für eine Wameinrichtung, beispielsweise eine Hupe, In den Handgriffen 8a, 8b sind weiterhin Betätigungsschalter 12a, 12b für eine Totmannbremse angeordnet. Mittels eines mit der Lenkwelle 4 in Wirkverbindung stehenden Lenksignalgebers 13, beispielsweise einer den Lenkwinkel und die Lenkgeschwindigkeit erfassenden Sensoreinrichtung, ist die Drehbewegung des als Lenker 2 ausgebildeten Lenkwinkelgebers zur Steuerung des Lenkantriebs des Flurförderzeugs erfassbar. Der Lenksignalgeber 13 ist hierbei am unteren Bereich eines Gehäuses 14 der Lenkvorrichtung 1 angeordnet, das an dem Gehäusebauteil 5 befestigt ist.

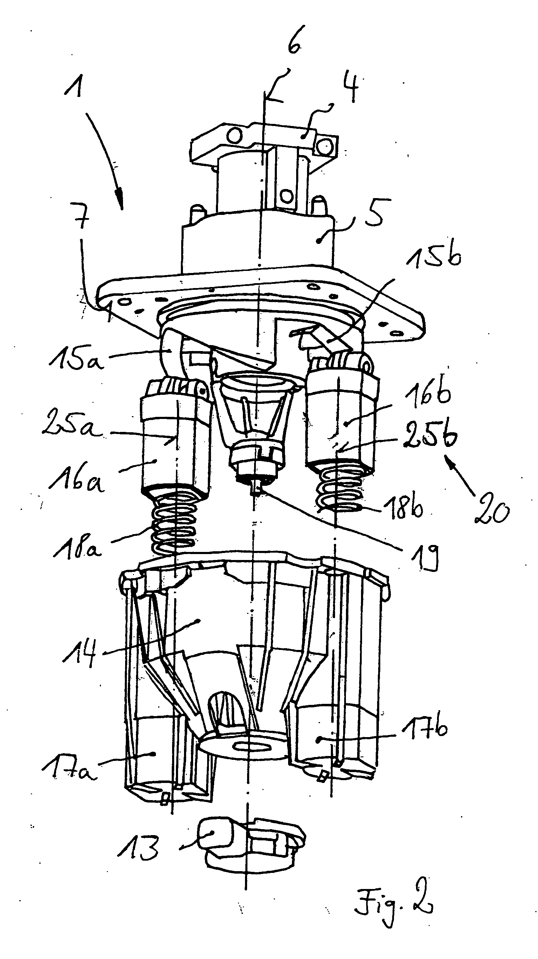

In dem Gehäuse 14 ist eine Lenkkrafteinrichtung 20 angeordnet, deren Aufbau in der Figur 2 gezeigt ist. Die Lenkkrafteinrichtung 20 weist eine Hubkurve 15a auf, die an einer scheibenförmigen Erweiterung der in dem Lagerbauteil 5 um die Drehachse 6 drehbar gelagerten Lenkwelle 4 ausgebildet ist. An der Hubkurve 15a ist ein Kolben 16a abgestützt, der in einer bohrungsförmigen Kolbenaufnahme 17a des Gehäuses 14 längsverschiebbar gelagert ist. Der Kolben 16a ist hierbei mittels einer als Druckfeder ausgebildeten Feder 18a in Richtung der Hubkurve 15a beaufschlagt. Die Lenkkrafteinrichtung 20 weist eine weitere Hubkurve 15b auf, die an der scheibenförmigen Erweiterung der Lenkwelle 4 ausgebildet ist, wobei an der weiteren Hubkurve 15b ein mittels einer als Druckfeder ausgebildeten Feder 18b beaufschlagter Kolben 16b abgestützt ist, der in einer bohrungsförmigen Kolbenaufnahme 17b des Gehäuses 14 längsverschiebbar gelagert ist.

Die Längsachsen 25a, 25b der Kolben 16a, 16b sind hierbei parallel zur Drehachse 6 und gegenüberliegend zur Drehachse 6 angeordnet. Die Hubkurve 15a und die weitere Hubkurve 15b sind an der scheibenförmigen Erweiterung der Lenkwelle 4 teilkreisförmig angeordnet und erzeugen einen in Richtung der Drehachse 6 und somit der Längsachsen 25a, 25b der Kolben 16a, 16b wirkenden axialen Hub.

Die Kolben 16a, 16b sind hierbei in den Kolbenaufnahmen 17a, 17b gegen Verdrehen um die Längsachse 25a, 25b gesichert, wozu der Außenumfang der Kolben 16a, 16b mit abgeflachten Bereichen und die Kolbenaufnahmen 17a, 17 mit entsprechenden Führungsflächen versehen sind.

Die Hubkurve 15a und die weitere Hubkurve 15b sind jeweils als Nockenbahn ausgebildet. Die Hubkurve 15a und die weitere Hubkurve 15b mit den entsprechenden Kolben 16a, 16b sind bezüglich der Drehachse 6 gegenüberliegend angeordnet. Es ist jedoch ebenfalls möglich, die Hubkurve 15a und die weitere Hubkurve 15b mit den Kolben 16a, 16b bezüglich der Drehachse 6 auf einer Seite anzuordnen.

Am unteren Ende der Lenkwelle 4 ist ein zapfenförmiger Mitnehmer 19 ausgebildet, der mit dem am unteren Ende des Gehäuses 14 angeordneten Lenksignalgeber 13 in Wirkverbindung steht.

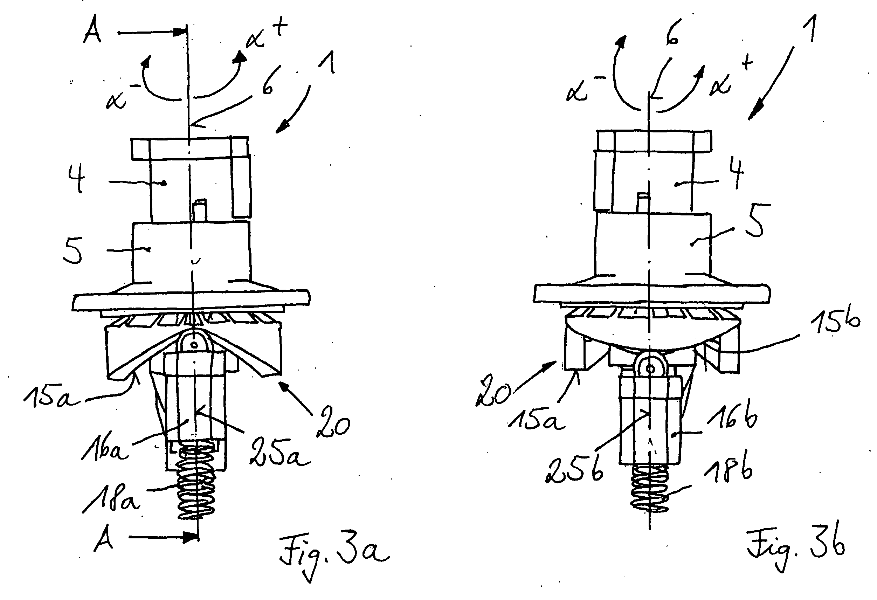

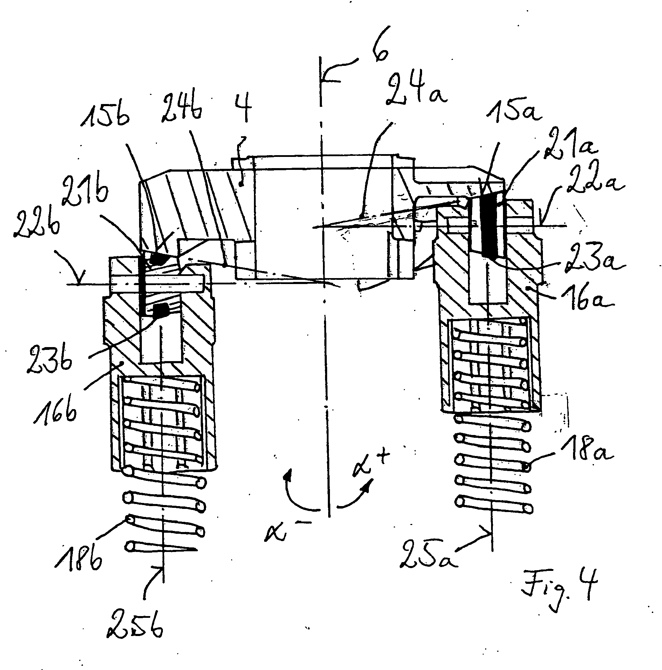

In den Figuren 3a und 3b sowie der Figur 4 ist die erfindungsgemäße Lenkvorrichtung 1 in der als Geradeausfahrstellung ausgebildeten Mittelstellung gezeigt.

In der in der Figur 3a dargestellten Mittelstellung weist die Hubkurve 15a den minimalen Hub auf. Der Hubverlauf der Hubkurve 15a ist hierbei derart ausgebildet, dass ausgehend von der Mittelstellung der Lenkwelle 4 mit zunehmendem Lenkwinkel α+ bzw. α- der Lenkwelle 4 der Hub der Hubkurve 15a auf den maximalen Hub bei maximalem Lenkwinkel zunimmt. Im Bereich der dargestellten Mittelstellung ist in einem Bereich von einem Lenkwinkel α von beispielsweise 0- 5° ein hubfreier Bereich an der Hubkurve 15a ausgebildet. Der Kolben 16a weist somit in der Mittelstellung der Lenkwelle 4 die größte Auslenkung auf, wodurch die als Druckfeder ausgebildete Feder 18a den minimalen Federweg und somit eine minimale Federkraft aufweist. Mit zunehmendem Lenkwinkel α+ bzw. α- der Lenkwelle 4 wird der Kolben 16a gemäß dem Verlauf der Hubkurve 15a nach in der Figur 3a unten beaufschlagt, wodurch der Federweg der Feder 18a und somit die Federkraft der Feder 18a zunimmt.

Wie aus der Figur 3b ersichtlich ist, weist die weitere Hubkurve 15b in der dargestellten Mittelstellung den maximalen Hub auf. Der Hubverlauf der Hubkurve 15b ist hierbei derart ausgebildet, dass ausgehend von der Mittelstellung der Lenkwelle 4 mit zunehmendem Lenkwinkel α+ bzw. α- der Lenkwelle 4 der Hub der Hubkurve 15a zum minimalen Hub bei maximalem Lenkwinkel abnimmt. Im Bereich der Mittelstellung ist in einem Bereich von einem Lenkwinkel α von beispielsweise 0 - 5° ein hubfreier Bereich an der Hubkurve 15b vorgesehen Der Kolben 16b weist somit in der Mittelstellung die kleinste Auslenkung auf, wodurch die Feder 18b den maximalen Federweg und somit maximale Federkraft aufweist. Mit zunehmendem Lenkwinkel α+ bzw. α- der Lenkwelle 4 wird der Kolben 16b gemäß dem Verlauf der Hubkurve 15b nach in der Figur 3a oben beaufschlagt, wodurch der Federweg der als Druckfeder ausgebildeten Feder 18b und somit die Federkraft der Feder 18b abnimmt.

Die Hubkurven 15a und die weitere Hubkurve 15b sind somit phasenverschoben. Der maximale Hub der Hubkurve 15a bei maximalem Lenkwinkel ist größer als der maximale Hub der Hubkurve 15b in der Mittelstellung der Lenkvorrichtung.

Die Hubkurve 15a und die Hubkurve 15b sind - wie aus der Figur 4 ersichtlich ist - konisch ausgebildet und hierbei in Richtung zur Drehachse 6 geneigt. Die Kolben 16a, 16b sind mittels jeweils eines als kegelförmige Rolle ausgebildeten Wälzkörpers 21a, 21b, der in dem entsprechenden Kolben 16a, 16b um eine Drehachse 22a, 22b drehbar gelagert ist, an der Hubkurve 15a bzw. der weiteren Hubkurve 15b abgestützt. Der Schnittpunkt der Drehachse 22a des Wälzkörpers 21a mit einer Verlängerung 24a der Hubkurve 15a liegt hierbei für jeden Lenkwinkel α auf der Drehachse 6. Entsprechend ist der Schnittpunkt der Drehachse 22b des Wälzkörpers 21 b mit einer Verlängerung 24b der Hubkurve 15b für jede Lenkwinkel α auf der Drehachse 6 angeordnet.

Die Wälzkörper 21a, 21 b sind mit einer umfangsseitigen Nut versehen, in der ein gummielastischer Ring 23a, 23b angeordnet ist. Der Außendurchmesser des gummielastischen Ringes 23a bzw. 23b ist derart größer als der Außendurchmesser des Wälzkörpers 21 a, 21b im Bereich der Nut gewählt, dass sich aufgrund der Anpressung der Kolben 16a, 16b durch die Federn 18a, 18b an die Hubkurve 15a bzw. die weitere Hubkurve 15b eine definierte Verformung der Ringe 23a, 23b einstellt. Die Ringe 23a, 23b sind beispielsweise als O-Ringe ausgeführt, die aus Nitril-Kautschuk (NBR) hergestellt sind.

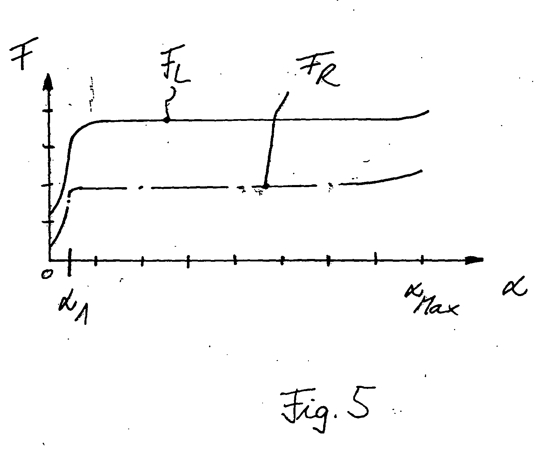

Ausgehend von der Mittelstellung der Lenkvorrichtung 1 wird somit bei einer Drehung der Lenkwelle 4 in Richtung des Lenkwinkels α+ bzw. α- der Kolben 16a durch die Hubkurve 15a nach in der Figur 3a unten beaufschlagt, wodurch die Kraft der Feder 18a zunimmt. Gleichzeitig wird bei einer Drehung der Lenkwelle 4 in Richtung des Lenkwinkels α+ bzw. α- der Kolben 16b, der entlang der Hubkurve 15b läuft, nach in der Figur 3b nach oben beaufschlagt, wodurch die Kraft der Feder 18b abnimmt. Es kann somit durch den Hub, den Hubverlauf und die Phasenverschiebung der Hubkurve 15a und der weiteren Hubkurve 15b durch die Überlagerung der Kräfte der Federn 18a, 18b eine Lenkkraft F_{L} der Lenkwelle 4 erzeugt werden, die der von der Bedienperson beim Lenken an dem als Lenker 2 ausgebildeten Lenkwinkelgeber 3 aufzubringenden Betätigungskraft entspricht und einen in der Figur 5 dargestellten Verlauf aufweist. Ausgehend von der die Gradeausfahrtstellung bildenden Mittelstellung, in der die Lenkkraft F_{L} aufgrund des hubfreien Bereichs der Hubkurve 15a und der weiteren Hubkurve 15b im Bereich eines Lenkwinkels α von beispielsweise 0 - 5° einen im wesentlichen konstanten minimalen Wert aufweist, nimmt die Lenkkraft F_{L} bis zu einem bestimmten Lenkwinkel α₁ von beispielsweise 5-10° ausgehend von dem konstanten minimalen Wert zu. Durch die im Bereich der Geradeausfahrtstellung minimale Lenkkraft F_{L} wird eine einfache und sichere Korrektur des Lenkwinkelgebers durch die Bedienperson ermöglicht, wodurch eine sichere Geradeausfahrt des Flurförderzeugs erzielt werden kann. Ab dem bestimmten Lenkwinkel α₁ ist die Lenkkraft F_{L} mit zunehmendem Lenkwinkel α im wesentlichen konstant auf einem erhöhten Wert. Diese konstante Lenkkraft F_{L} auf dem erhöhten Wert bewirkt hierbei ein stabiles Fahrverhalten des Flurförderzeugs, da durch die Höhe der Lenkkraft F_{L} eine ungewollte Beaufschlagung des Lenkgebers und somit eine ungewollte Änderung des Lenkwinkels vermieden wird. Im Bereich des maximalen Lenkwinkels α_{Max} nimmt die Lenkkraft F_{L} zu, wodurch der Bedienperson der maximale Lenkwinkel α_{Max} mitgeteilt werden kann.

Lässt die Bedienperson den als Lenker 2 ausgebildeten Lenkwinkelgeber 3 bei einem eingestellten Lenkwinkel α los, wird durch den Kolben 16a, der mittels der Feder 18a in Richtung der Hubkurve 15a beaufschlagt ist, die Lenkwelle 4 in die Mittelstellung beaufschlagt. Hierbei wird der Kolben 16b, der dem Verlauf der weiteren Hubkurve 15b folgt, nach in der Figur 3b unten beaufschlagt, wodurch die Kraft der Feder 18b zunimmt. Durch den Hub, den Hubverlauf und die Phasenverschiebung der Hubkurve 15a und der weiterten Hubkurve 15b wird hierbei durch die Überlagerung der Kräfte der Federn 18a, 18b eine die Lenkwelle 4 in die Mittelstellung beaufschlagende Rückstellkraft F_{R} erzeugt, die den in der Figur 5 dargestellten Verlauf aufweist. Die Rückstellkraft F_{R} ist hierbei ausgehend vom maximalen Lenkwinkel α_{Max} bis zu dem bestimmten Lenkwinkel α₁ im wesentlichen konstant auf einem erhöhten Wert. Von dem Lenkwinkel α₁ bis zur Geradeausfahrtstellung nimmt die Rückstellkraft F_{R} auf einen minimalen Wert ab, der aufgrund des hubfreien Bereichs der Hubkurve 15a und der weiteren Hubkurve 15b im Bereich eines Lenkwinkels α von beispielsweise 0 - 5° einen im wesentlichen konstanten minimalen Wert aufweist.

Bei einer Drehung der Lenkwelle 4 in Richtung des Lenkwinkels α+ bzw. α- muss beim Abrollen der Wälzkörper 21a, 21 b an den Hubkurven 15a bzw. 15b die an den gummielastischen Ringen 23a, 23b auftretende Rollreibung von der Betätigungskraft der Bedienperson überwunden werden, wodurch die Rollreibung die aufzubringende Lenkkraft F_{L} an der Lenkwelle 4 erhöht. Beim Rückstellen der Lenkwelle 4 wird die an den gummielastischen Ringen 23a, 23b beim Abrollen der Wälzkörper 21a, 21b auf den Hubkurven 15a bzw. 15b auftretende Rollreibung von der Kraft der Feder 18a überwunden, die über den an der Hubkurve 15a abgestützten Kolben 16a die Lenkwelle 4 in Richtung der Mittelstellung zurückstellt. An den Lenkwelle 4 steht somit über den gesamten Lenkwinkel α eine durch die Rollreibung reduzierte Rückstellkraft F_{R} an, die geringer als die beim Lenken an der Lenkwelle 4 von der Betätigungskraft aufzubringende Lenkkraft F_{L} ist.

Hierdurch wird eine Lenkvorrichtung 1 zur Verfügung gestellt, bei der beim Loslassen des Lenkwinkelgebers 3 ein automatisches Rückstellen des Lenkwinkelgebers 3 in die Mittelstellung erzielt wird, wobei beim Rückstellen in die Mittelstellung ein Überschwingen wirksam vermieden wird.

Die Lenkkraft F_{L} und die Rückstellkraft F_{R} sowie der Verlauf der Lenkkraft F_{L} und der Rückstellkraft F_{R} kann hierbei über den Hub, den Hubverlauf sowie der Phasenverschiebung der Hubkurve 15a sowie der weiteren Hubkurve 15b, die Federeigenschaften der Federn 18a, 18b, die gleich oder unterschiedlich sein können, sowie die Eigenschaften der gummielastischen Ringe 23a, 23b verändert werden.

## Patentansprüche

1. Lenkvorrichtung (1) mit einem Lenkwinkelgeber (3), der mit einer drehbar gelagerten, mit einem elektrischen Lenksignalgeber (13) in Wirkverbindung stehenden Lenkwelle (4) in Wirkverbindung steht, und mit einer auf die Lenkwelle (4) einwirkenden, eine Lenkkraft erzeugenden Lenkkrafteinrichtung (20), **dadurch gekennzeichnet, dass** die Lenkkrafteinrichtung (20) eine mit der Lenkwelle (4) in Wirkverbindung stehende Hubkurve (15a) und einen längsbeweglichen Kolben (16a) aufweist, der von einer Feder (18a), insbesondere einer Druckfeder, in Richtung der Hubkurve (15a) beaufschlagt ist.

2. Lenkvorrichtung nach Anspruch 1, **dadurch gekennzeichnet, dass** die Lenkkrafteinrichtung (20) eine weitere mit der Lenkwelle (4) in Wirkverbindung stehende Hubkurve (15b) und einen weiteren längsbeweglichen Kolben (16b) aufweist, der von einer weiteren Feder (18b), insbesondere einer Druckfeder, in Richtung der weiteren Hubkurve (15b) beaufschlagt ist.

3. Lenkvorrichtung nach Anspruch 1 oder 2, **dadurch gekennzeichnet, dass** die Hubkurve (15a) und/oder die weitere Hubkurve (15b) derart ausgebildet sind, dass über den an dem Lenkwinkelgeber (3) vorgegebenen Lenkwinkel (α) eine im wesentlichen konstante Lenkkraft (F_{L}) und/oder eine im wesentlichen konstante Rückstellkraft (F_{R}) erzeugbar ist.

4. Lenkvorrichtung nach einem der Ansprüche 1 bis 3, **dadurch gekennzeichnet, dass** die Lenkkraft (F_{L}) über den gesamten Lenkwinkel (α) größer als die Rückstellkraft (F_{R}) ist.

5. Lenkvorrichtung nach einem der Ansprüche 1 bis 4, **dadurch gekennzeichnet, dass** die Hubkurve (15a) und/oder die weitere Hubkurve (15b) derart ausgebildet sind, dass im Bereich einer die Mittelstellung bildenden Geradeausfahrtstellung eine im wesentlichen konstante minimale Lenkkraft (F_{L}) und/oder eine im wesentlichen konstante minimale Rückstellkraft (F_{R}) erzeugbar ist.

6. Lenkvorrichtung nach einem der Ansprüche 1 bis 5, **dadurch gekennzeichnet, dass** die Hubkurve (15a) und/oder die weitere Hubkurve (15b) derart ausgebildet sind, dass zwischen der die Geradeausfahrtstellung bildenden Mittelstellung und einem bestimmten Lenkwinkel (α₁) eine ansteigende Lenkkraft (F_{L}) und/oder ansteigende Rückstellkraft (F_{R}) erzeugbar ist.

7. Lenkvorrichtung nach einem der Ansprüche 1 bis 6, **dadurch gekennzeichnet, dass** die Hubkurve (15a) und/oder die weitere Hubkurve (15b) als jeweils eine Nockenbahn ausgebildet sind, wobei die Nockenbahnen gegeneinander phasenverschoben sind.

8. Lenkvorrichtung nach einem der Ansprüche 1 bis 7, **dadurch gekennzeichnet, dass** der Hub und/oder der Hubverlauf der Hubkurve (15a) und der weiteren Hubkurve (15b) unterschiedlich sind.

9. Lenkvorrichtung nach einem der Ansprüche 1 bis 8, **dadurch gekennzeichnet, dass** der Hub der Hubkurve (15a) ausgehend von der Mittelstellung der Lenkvorrichtung (1) bis zum maximalen Lenkwinkel (α_{Max}) der Lenkvorrichtung (1) auf den maximalen Hub zunimmt.

10. Lenkvorrichtung nach einem der Ansprüche 2 bis 9, **dadurch gekennzeichnet, dass** der Hub der weiteren Hubkurve (15b) in der Mittelstellung der Lenkvorrichtung (1) den maximalen Hub aufweist und bis zum maximalen Lenkwinkel (α_{Max}) der Lenkvorrichtung (1) abnimmt.

11. Lenkvorrichtung nach einem der Ansprüche 2 bis 10, **dadurch gekennzeichnet, dass** der maximale Hub der Hubkurve (15a) größer als der maximale Hub der weiteren Hubkurve (15b) ist, insbesondere für jeden Lenkwinkel (α) der Lenkwelle (4) der Hub der Hubkurve (15a) größer als der Hub der weiteren Hubkurve (15b) ist.

12. Lenkvorrichtung nach einem der Ansprüche 1 bis 11, **dadurch gekennzeichnet, dass** die Hubkurve (15a) und/oder die weitere Hubkurve (15b) im Bereich der Mittelstellung der Lenkvorrichtung (1) einen hubfreien Bereich aufweisen.

13. Lenkvorrichtung nach einem der Ansprüche 1 bis 12, **dadurch gekennzeichnet, dass** der Kolben (16a) und/oder der weitere Kolben (16b) mittels eines Wälzkörpers (21 a; 21 b), insbesondere einer Rolle, an der Hubkurve (15a) und/oder der weiteren Hubkurve (15b) abgestützt ist.

14. Lenkvorrichtung nach Anspruch 13, **dadurch gekennzeichnet, dass** an dem Wälzkörper (21a; 21b) ein gummielastischer Ring (23a; 23b) angeordnet ist, mittels dem der Wälzkörper (21a; 21b) an der Hubkurve (15a) und/oder der weiteren Hubkurve (15b) abgestützt ist

15. Lenkvorrichtung nach Anspruch 14, **dadurch gekennzeichnet, dass** der gummielastische Ring (23a; 23b) in einer Nut, insbesondere einer umfangsseitigen Nut, des Wälzkörpers (21a; 21b) angeordnet ist.

16. Lenkvorrichtung nach Anspruch 14 oder 15, **dadurch gekennzeichnet, dass** der Außendurchmesser des gummielastischen Rings (23a; 23b) größer als der Außendurchmesser des Wälzkörpers (21a; 21b) im Bereich der Nut ist.

17. Lenkvorrichtung nach einem der Ansprüche 14 bis 16, **dadurch gekennzeichnet, dass** der gummielastische Ring (23a; 23b) aus Nitril-Kautschuk besteht.

18. Lenkvorrichtung nach einem der Ansprüche 1 bis 17, **dadurch gekennzeichnet, dass** der Kolben (16a) und/oder der weiteren Kolben (16b) in Richtung der Drehachse (6) der Lenkvorrichtung (1) längsverschiebbar angeordnet ist, wobei mittels der Hubkurve (15a) und/oder der weiteren Hubkurve (15b) eine Auslenkung des Kolbens (16a) und/oder des weiteren Kolbens (16b) in Richtung der Drehachse (6) erzeugbar ist.

19. Lenkvorrichtung nach Anspruch 18, **dadurch gekennzeichnet, dass** die Hubkurve (15a) und/oder die weitere Hubkurve (15b) zur Drehachse (6) geneigt ist.

20. Lenkvorrichtung nach Anspruch 18 oder 19, **dadurch gekennzeichnet, dass** der Wälzkörper (21a; 21b) kegelförmig ausgebildet ist.

21. Lenkvorrichtung nach Anspruch 19 oder 20, **dadurch gekennzeichnet, dass** der Schnittpunkt der Drehachse (22a; 22b) des Wälzkörpers (21a; 21) mit einer Verlängerung (24a) der Hubkurve (15a) und/oder einer Verlängerung (24b) der weiteren Hubkurve (15b) auf der Drehachse (6) der Lenkwelle (4) angeordnet ist.

22. Lenkvorrichtung nach einem der Ansprüche 1 bis 21, **dadurch gekennzeichnet,** die Lenkkrafteinrichtung (20) in einem Gehäuse (14) der Lenkvorrichtung (1) angeordnet, wobei der Kolben (18a) und/oder der weitere Kolben (18b) in dem Gehäuse (14) der Lenkvorrichtung (1) längsverschiebbar gelagert ist.

23. Flurförderzeug, insbesondere Lagertechnikgerät, mit einer Lenkvorrichtung nach einem der vorangegangenen Ansprüche.

## Claims

1. Steering device (1) with a steering angle sensor (3), which is in operative connection with a rotatably mounted steering shaft (4) which is in operative connection with an electric steering signal sensor (13), and with a steering force mechanism (20) acting on the steering shaft (4) and generating a steering force, **characterised in that** the steering force mechanism (20) has a lifting cam (15a), which is in operative connection with the steering shaft (4) and a longitudinally moveable piston (16a), which is loaded by a spring (18a), in particular a compression spring, in the direction of the lifting cam (15a).

2. Steering device according to claim 1, **characterised in that** the steering force mechanism (20) has a further lifting cam (15b), which is in operative connection with the steering shaft (4), and a further longitudinally moveable piston (16b), which is loaded by a further spring (18b), in particular a compression spring, in the direction of the further lifting cam (15b).

3. Steering device according to claim 1 or 2, **characterised in that** the lifting cam (15a) and/or the further lifting cam (15b) are configured in such a way that a substantially constant steering force (F_{L}) and/or a substantially constant restoring force (F_{R}) can be generated by means of the steering angle (α) which is predetermined at the steering angle sensor (3).

4. Steering device according to any one of claims 1 to 3, **characterised in that** the steering force (F_{L}) over the entire steering angle (α) is greater than the restoring force (F_{R}).

5. Steering device according to any one of claims 1 to 4, **characterised in that** the lifting cam (15a) and/or the further lifting cam (15b) are configured in such a way that a substantially constant minimal steering force (F_{L}) and/or a substantially constant minimal restoring force (F_{R}) can be produced in the region of a straight ahead travelling position forming the central position.

6. Steering device according to any one of claims 1 to 5, **characterised in that** the lifting cam (15a) and/or the further lifting cam (15b) are configured in such a way that an increasing steering force (F_{L}) and/or an increasing restoring force (F_{R}) can be produced between the central position forming the straight ahead travelling position and a specific steering angle (α₁).

7. Steering device according to any one of claims 1 to 6, **characterised in that** the lifting cam (15a) and/or the further lifting cam (15b) are in each case configured as a cam track, the cam tracks being phase-displaced relative to one another.

8. Steering device according to any one of claims 1 to 7, **characterised in that** the lift and/or the lifting course of the lifting cam (15a) and the further lifting cam (15b) are different.

9. Steering device according to any one of claims 1 to 8, **characterised in that** the lift of the lifting cam (15a), proceeding from the central position of the steering device (1) up to the maximum steering angle (α_{Max}) of the steering device (1) increases to the maximum lift.

10. Steering device according to any one of claims 2 to 9, **characterised in that** the lift of the further lifting cam (15b) in the central position of the steering device (1) has the maximum lift and decreases to the maximum steering angle (α_{Max}) of the steering device (1).

11. Steering device according to any one of claims 2 to 10, **characterised in that** the maximum lift of the lifting cam (15a) is greater than the maximum lift of the further lifting cam (15b), in particular, for each steering angle (α) of the steering shaft (4), the lift of the lifting cam (15a) is greater than the lift of the further lifting cam (15b).

12. Steering device according to any one of claims 1 to 11, **characterised in that** the lifting cam (15a) and/or the further lifting cam (15b) in the region of the central position of the steering device (1) have a lift-free region.

13. Steering device according to any one of claims 1 to 12, **characterised in that** the piston (16a) and/or the further piston (16b) is supported by means of a rolling body (21 a; 21 b), in particular a roller, on the lifting cam (15a) and/or the further lifting cam (15b).

14. Steering device according to claim 13, **characterised in that** a rubber-elastic ring (23a; 23b), by means of which the rolling body (21 a; 21 b) is supported on the lifting cam (15a) and/or the further lifting cam (15b), is arranged on the rolling body (21 a; 21 b).

15. Steering device according to claim 14, **characterised in that** the rubber-elastic ring (23a; 23b) is arranged in a groove, in particular a peripheral groove, of the rolling body (21 a; 21 b).

16. Steering device according to claim 14 or 15, **characterised in that** the external diameter of the rubber-elastic ring (23a; 23b) is greater than the external diameter of the rolling body (21 a; 21 b) in the region of the groove.

17. Steering device according to any one of claims 14 to 16, **characterised in that** the rubber-elastic ring (23a; 23b) consists of nitrile rubber.

18. Steering device according to any one of claims 1 to 17, **characterised in that** the piston (16a) and/or the further piston (16b) is longitudinally displaceably arranged in the direction of the rotational axis (6) of the steering device (1), it being possible by means of the lifting cam (15a) and/or the further lifting cam (15b) to produce a deflection of the piston (16a) and/or the further piston (16b) in the direction of the rotational axis (6).

19. Steering device according to claim 18, **characterised in that** the lifting cam (15a) and/or the further lifting cam (15b) is inclined with respect to the rotational axis (6).

20. Steering device according to claim 18 or 19, **characterised in that** the rolling body (21 a; 21 b) is conical.

21. Steering device according to claim 19 or 20, **characterised in that** the point of intersection of the rotational axis (22a; 22b) of the rolling body (21a; 21) with an extension (24a) of the lifting cam (15a) and/or an extension (24b) of the further lifting cam (15b) is arranged on the rotational axis (6) of the steering shaft (4).

22. Steering device according to any one of claims 1 to 21, **characterised in that** the steering force mechanism (20) is arranged in a housing (14) of the steering device (1), the piston (18a) and/or the further piston (18b) being longitudinally displaceably mounted in the housing (14) of the steering device (1).

23. Industrial truck, in particular warehouse engineering apparatus, with a steering device according to any one of the preceding claims.

## Revendications

1. Dispositif de direction (1) comportant un capteur d'angle de direction (3) coopérant avec un arbre de direction (4) lui-même coopérant avec un capteur électrique de signal de direction (13) ainsi qu'une installation de force de direction (20) qui génère une force de direction agissant sur l'arbre de direction (4),
**caractérisé en ce que**
l'installation de force de direction (20) comporte une came (15a) coopérant avec l'arbre de direction (4) et un piston mobile en coulissement (16a) sollicité par un ressort (18a), notamment un ressort de compression en direction de la came (15a).

2. Dispositif de direction selon la revendication 1,
**caractérisé en ce que**
l'installation de force de direction (20) comporte une autre came (15b) coopérant avec l'arbre de direction (4) et un autre piston (16b) mobile longitudinalement, sollicité par un autre ressort (18b), notamment un ressort de compression, en direction de l'autre came (15b).

3. Dispositif de direction selon la revendication 1 ou 2,
**caractérisé en ce que**
la came (15a) et/ou l'autre came (15b) sont réalisées pour générer une force de direction (F_{L}) pratiquement constante et/ou une force de rappel (F_{R}) pratiquement constante pour un angle de direction (α) prédéfini dans le capteur d'angle de direction (3).

4. Dispositif de direction selon l'une des revendications 1 à 3,
**caractérisé en ce que**
la force de direction (F_{L}) est supérieure à la force de rappel (F_{R}) pour tout l'angle de direction (α).

5. Dispositif de direction selon l'une des revendications 1 à 4,
**caractérisé en ce que**
la came (15a) et/ou l'autre came (15b) sont réalisées pour générer dans la région d'une position de déplacement en ligne droite correspondant à la position médiane, une force de direction (F_{L}) minimale pratiquement constante et/ou une force de rappel (F_{R}) minimale pratiquement constante.

6. Dispositif de direction selon l'une des revendications 1 à 5,
**caractérisé en ce que**
la came (15a) et/ou l'autre came (15b) sont réalisées pour qu'entre la position médiane correspondant à la position de déplacement en ligne droite et un certain angle de direction (α₁) on génère une force de direction (F_{L}) croissante et/ou une force de rappel (F_{R}) croissante.

7. Dispositif de direction selon l'une des revendications 1 à 6,
**caractérisé en ce que**
la came (15a) et/ou l'autre came (15b) sont réalisées chacune selon un chemin de came et les chemins de came sont déphasés l'un par rapport à l'autre.

8. Dispositif de direction selon l'une des revendications 1 à 7,
**caractérisé en ce que**
la course et/ou la courbe de la came (15a) et de l'autre came (15b) sont différentes.

9. Dispositif de direction selon l'une des revendications 1 à 8,
**caractérisé en ce que**
la course de la came (15a) augmente à partir de la position médiane du dispositif de direction (1) jusque vers l'angle de direction maximum (α_{Max}) du dispositif de direction (1) jusqu'à la course maximale.

10. Dispositif de direction selon l'une des revendications 2 à 9,
**caractérisé en ce que**
la course de l'autre came (15b) en position centrale du dispositif de direction (1) correspond à la course maximale et diminue jusqu'à l'angle de direction maximum (α_{Max}) du dispositif de direction (1).

11. Dispositif de direction selon l'une des revendications 2 à 10,
**caractérisé en ce que**
la course maximale de la came (15a) est supérieure à la course maximale de l'autre came (15b) et notamment pour chaque angle de direction (α) de l'arbre de direction (4), la course de la came (15a) est supérieure à la course de l'autre came (15b).

12. Dispositif de direction selon l'une des revendications 1 à 11,
**caractérisé en ce que**
la came (15a) et/ou l'autre came (15b) présentent une zone sans course dans la région de la position médiane du dispositif de direction (1).

13. Dispositif de direction selon l'une des revendications 1 à 12,
**caractérisé en ce que**
le piston (16a) et/ou l'autre piston (16b) s'appuient par un organe de roulement (21 a, 21b), notamment un galet, contre la came (15a) et/ou l'autre came (15b).

14. Dispositif de direction selon la revendication 13,
**caractérisé en ce que**
l'organe de roulement (21a, 21b) a un anneau élastique comme du caoutchouc (23a, 23b) par lequel l'organe de roulement (21a, 21b) s'appuie contre la came (15a) et/ou l'autre came (15b).

15. Dispositif de direction selon la revendication 14,
**caractérisé en ce que**
la bague élastique comme du caoutchouc (23a, 23b) est logée dans une rainure, notamment une rainure côté périphérique de l'organe de roulement (21a, 21b).

16. Dispositif de direction selon la revendication 14 ou 15,
**caractérisé en ce que**
le diamètre extérieur de l'anneau élastique comme du caoutchouc (23a, 23b) est supérieur au diamètre extérieur de l'organe de roulement (21a, 21 b) au niveau de la rainure.

17. Dispositif de direction selon l'une des revendications 14 à 16,
**caractérisé en ce que**
l'anneau élastique comme du caoutchouc (23a, 23b) est en caoutchouc nitrile.

18. Dispositif de direction selon l'une des revendications 1 à 17,
**caractérisé en ce que**
le piston (16a) et/ou l'autre piston (16b) sont coulissants longitudinalement en direction de l'axe de rotation (6) du dispositif de direction (1) et à l'aide de la came (15a) et/ou de l'autre came (15b) on génère un débattement du piston (16a) et/ou de l'autre piston (16b) en direction de l'axe de rotation (6).

19. Dispositif de direction selon la revendication 18,
**caractérisé en ce que**
la came (15a) et/ou l'autre came (15b) sont inclinées par rapport à l'axe de rotation (6).

20. Dispositif de direction selon la revendication 18 ou 19,
**caractérisé en ce que**
l'organe de roulement (21a, 21b) est de forme conique.

21. Dispositif de direction selon la revendication 19 ou 20,
**caractérisé en ce que**
le point d'intersection de l'axe de rotation (22a, 22b) de l'organe de roulement (21a, 21 b) est monté sur l'axe de rotation (6) de l'arbre de direction (4) par un prolongement (24a) de la came (15a) et/ou un prolongement (24b) de l'autre came (15b).

22. Dispositif de direction selon l'une des revendications 1 à 21,
**caractérisé en ce que**
l'installation de force de direction (20) est logée dans un boîtier (14) du dispositif de direction (1), le piston (18a) et/ou l'autre piston (18b) étant logés de manière coulissante longitudinalement dans le boîtier (14) du dispositif de direction (1).

23. Chariot de manutention, notamment appareil de stockage comportant un dispositif de direction selon l'une des revendications précédentes.
